# EUROPEAN PATENT APPLICATION

(11) **EP 3 488 706 A1**
(43) Date of publication of application: **29.05.2019**
(21) Application number: 17830632.0
(22) Date of filing: 27.02.2017
(51) Int. Cl.: A23L 2/00, A23L 2/70, A23L 33/105

(54) **CAFFEINE-CONTAINING COLORLESS TRANSPARENT DRINK**

(30) Priority: 22.07.2016 JP 2016144573
(71) Applicant: Suntory Holdings Limited, Osaka-shi, Osaka 530-8203 (JP)
(72) Inventor: HOMBO, Mizuho, Kawasaki-shi Kanagawa 211-0067 (JP); YASUI, Yohei, Kawasaki-shi Kanagawa 211-0067 (JP)
(74) Representative: Vossius & Partner Patentanwälte Rechtsanwälte mbB
(86) International application number: PCT/JP2017/007543
(87) International publication number: WO 2018/016110

(57) **Abstract**

An object of the present invention to provide a caffeine-containing colorless transparent beverage that does not deteriorate in clean taste or refreshing flavor and is less apt to make one feel bitterness coming from caffeine.

At least one sugar selected from the group consisting of glucose, fructose and sucrose, and at least one acid selected from the group consisting of citric acid, malic acid, tartaric acid, phosphoric acid, lactic acid and gluconic acid are mixed with a colorless transparent beverage containing 0.1 to 60 mg/100 mL of caffeine; the acidity of the beverage is adjusted to be in the range of 0.04 to 0.31 g/100 mL; the weight ratio of a content of said sugar to said acidity is adjusted to be in the range of 16 to 250; and an alcohol with 2 or 3 carbon atoms is added to the beverage.

## Description

### TECHNICAL FIELD

The present invention relates to caffeine-containing colorless transparent beverages, and in particular to colorless transparent beverages that are less apt to make one feel bitterness coming from caffeine.

### BACKGROUND ART

In recent years, flavored water has gained popularity against the backdrop of the rise in consumers' health consciousness and natural preference. Flavored water is a beverage produced by adding ingredients such as sweetener, flavorant, essence, and/or fruit juice to water such as mineral water (including natural mineral water), and is a beverage with a water-like appearance, also called "near-water". Those beverages like flavored water, which are colorless and transparent but have a flavor of fruit or the like, generally have such a clean taste and refreshing flavor that one can drink them as an alternative to water, and are characterized by being as easy as or easier to drink than water.

In the meantime, caffeine is an ingredient found in coffee, green tea and the like, and is known to give a comfortable stimulus when one drinks a beverage containing a certain amount of caffeine. One of the main effects of caffeine is an awakening effect, and it is known that caffeine helps reduce drowsiness during daytime and sharpen concentration. Many reports have hitherto been published on caffeine-containing beverages (PTLs 1-5).

However, since caffeine is strong in bitterness, some caffeine-containing beverages may have an unfavorable taste for customers depending on the types of the beverages to which to add caffeine. Various methods for suppressing bitterness of caffeine have been long reported, and for example, it is known that polysaccharide thickeners such as gum ghatti, gluten, gum arabic and soybean polysaccharides are capable of suppressing bitterness coming from caffeine (PTL 6). Other methods for suppressing caffeine's bitterness have also been reported, but there has hitherto been no technique disclosed for effective suppression of caffeine's bitterness particularly in colorless transparent beverages like flavored water.

### CITATION LIST

### PATENT LITERATURES

PTL 1: Japanese Patent Application Publication No. JP 2014-55
PTL 2: Japanese Patent No. JP 5313320
PTL 3: Japanese Patent No. JP 4745784
PTL 4: Japanese Patent No. JP 4903297
PTL 5: Japanese Patent No. JP 3082920
PTL 6: Japanese Patent Application Publication No. JP 2011-78363

### SUMMARY OF INVENTION

### TECHNICAL PROBLEM

If it is possible to add an appropriate amount of caffeine to transparent beverages like flavored water, then it is expected that it will be possible to provide beverages that one can drink quickly and easily on various occasions, such as immediately after awakening, during a break in daytime work, and in the middle of a walk, and which allow one to experience caffeine's effects. However, in order to ensure that colorless transparent beverages like flavored water become easy to drink like water, it is necessary to diminish the total flavor of those colorless transparent beverages. The present inventors discovered that colorless transparent beverages particularly containing a strongly bitter ingredient like caffeine are felt to be more prominent in bitterness than other common beverages (e.g., colored beverages or cloudy beverages).

There have hitherto been many reports on techniques for suppressing caffeine's bitterness. However, colorless transparent beverages like flavored water are generally characterized by being relatively low in the amounts and types of other ingredients added besides water. Therefore, when another ingredient is added to colorless transparent beverages, the beverages may easily lose its balance of flavor. In fact, it has been difficult to suppress caffeine's bitterness in colorless transparent beverages while keeping the palatability of those beverages, such as clean taste and refreshing flavor. Conventional techniques may be effective for suppressing bitterness but are inadequate to ensure the maintenance of the clean taste of colorless transparent beverages.

Thus, an object of the present invention to provide a caffeine-containing colorless transparent beverage that does not deteriorate in clean taste or refreshing flavor and is less apt to make one feel bitterness coming from caffeine.

### SOLUTION TO PROBLEM

The present inventors have made intensive studies to achieve the aforementioned object, and as a result, found that when particular sugar(s) and acid(s) are added to a colorless transparent beverage containing a specified amount of caffeine, the acidity of the beverage is adjusted to an appropriate level, and the weight ratio of a content of the particular sugar(s) with respect to the acidity of the beverage is set to lie in the particular range, there can be provided a colorless transparent beverage that does not deteriorate in clean taste or refreshing flavor and is less apt to make one feel bitterness coming from caffeine. Further, the inventors found that when an alcohol with 2 or 3 carbon atoms is added in a specified amount to said beverage, the effect to suppress bitterness coming from caffeine can be further enhanced. On the basis of these findings, the inventors have completed this invention.

The present invention includes, but is not limited to, the following.
(1) A beverage comprising:
   0.1 to 60 mg/100 mL of caffeine;
   at least one sugar selected from the group consisting of glucose, fructose and sucrose; and
   at least one acid selected from the group consisting of citric acid, malic acid, tartaric acid, phosphoric acid, lactic acid and gluconic acid;
   wherein the beverage has an acidity of 0.04 to 0.31 g/100 mL;
   wherein the beverage has a weight ratio of a content of said sugar to said acidity of 16 to 250;
   wherein the beverage contains 0.001 to 0.5 wt.% of an alcohol with 2 or 3 carbon atoms;
   wherein the beverage has an absorbance at a wavelength of 660 nm of 0.06 or less; and
   wherein the beverage has a ΔE (color difference) value of 3.5 or less relative to pure water.
(2) The beverage as set forth in (1), wherein the beverage is a packaged beverage.
(3) A method for producing a beverage comprising:
   0.1 to 60 mg/100 mL of caffeine;
   at least one sugar selected from the group consisting of glucose, fructose and sucrose; and
   at least one acid selected from the group consisting of citric acid, malic acid, tartaric acid, phosphoric acid, lactic acid and gluconic acid;
   wherein the beverage has an absorbance at a wavelength of 660 nm of 0.06 or less;
   wherein the beverage has a ΔE (color difference) value of 3.5 or less relative to pure water;
   the method comprising the steps of:
      adjusting acidity to be in the range of 0.04 to 0.31 g/100 mL;
      adjusting a weight ratio of a content of said sugar to said acidity to be in the range of 16 to 250; and
      adding an alcohol with 2 or 3 carbon atoms to the beverage.

### ADVANTAGEOUS EFFECT OF INVENTION

The present invention can provide a colorless transparent beverage that does not deteriorate in clean taste or refreshing flavor and is less apt to make one feel bitterness coming from caffeine. The beverage provided by this invention is a beverage that is easy to drink like water and also exerts caffeine's effects.

### DESCRIPTION OF EMBODIMENTS

One aspect of the present invention is a beverage comprising:
0.1 to 60 mg/100 mL of caffeine;
at least one sugar selected from the group consisting of glucose, fructose and sucrose; and
at least one acid selected from the group consisting of citric acid, malic acid, tartaric acid, phosphoric acid, lactic acid and gluconic acid;
wherein the beverage has an acidity of 0.04 to 0.31 g/100 mL;
wherein the beverage has a weight ratio of a content of said sugar to said acidity of 16 to 250;
wherein the beverage contains 0.001 to 0.5 wt.% of an alcohol with 2 or 3 carbon atoms;
wherein the beverage has an absorbance at a wavelength of 660 nm of 0.06 or less; and
wherein the beverage has a ΔE (color difference) value of 3.5 or less relative to pure water.

### (Caffeine)

The beverage of the present invention comprises caffeine. The content of caffeine in the beverage of this invention is in the range of 0.1 to 60 mg/100 mL. The content of caffeine in the beverage of this invention is preferably 0.5 mg/100 mL or more, 1 mg/100 mL or more, 2 mg/100 mL or more, 3 mg/100 mL or more, 4 mg/100 mL or more, 5 mg/100 mL or more, 6 mg/100 mL or more, 7 mg/100 mL or more, 8 mg/100 mL or more, 9 mg/100 mL or more, or 10 mg/100 mL or more, and also is preferably 50 mg/100 mL or less, 40 mg/100 mL or less, 30 mg/100 mL or less, 20 mg/100 mL or less, 19 mg/100 mL or less, 18 mg/100 mL or less, 17 mg/100 mL or less, 16 mg/100 mL or less, 15 mg/100 mL or less, 14 mg/100 mL or less, or 13 mg/100 mL or less. The content of caffeine in the beverage of this invention is in the range of preferably 0.1 to 40 mg/100 mL, more preferably 1 to 30 mg/100 mL, yet more preferably 2 to 20 mg/100 mL. When caffeine is in the form of a hydrate or the like, the caffeine content shall be calculated in terms of its free form.

The caffeine content can be measured by following a method known to skilled artisans -- for example, using a spectroscopic method such as HPLC, LC-MS, GC-MS, LC, GC, or near-infrared spectroscopy.

In the present invention, caffeine can be used in the form of a food additive, or in the form of an extract of a caffeine-containing plant (*e.g.,* tea leaf, cola nut, coffee bean) or a concentrate thereof. In the beverage of this invention, caffeine is used in the form of preferably a commercially available product pursuant to the food additive standard, especially preferably a pure product (*i.e.,* a purified product containing at least 98% caffeine).

### (Sugar)

The beverage of the present invention comprises at least one sugar selected from the group consisting of glucose, fructose and sucrose.

The content of the aforementioned sugar in the beverage of the present invention is not particularly limited, but is for example in the range of 1 to 10 g/100 g. This content is preferably 1 g/100 g or more, 2 g/100 g or more, 3 g/100 g or more, 4 g/100 g or more, or 5 g/100 g or more, and also is preferably 10 g/100 g or less, 9 g/100 g or less, 8 g/100 g or less, or 7 g/100 g or less. The content of said sugar in the beverage of this invention is in the range of preferably 2 to 8 g/100 g, more preferably 3 to 7 g/100 mL.

The content of the aforementioned sugar is defined as the total content of at least one sugar selected from the group consisting of glucose, fructose and sucrose. In the beverage of the present invention, each one of glucose, fructose and sucrose can be used alone, or two or more thereof can be used in combination.

The contents of those different sugars can be measured by following a method known to skilled artisans -- for example, using HPLC or the like. In the present invention, a commercially available product can be used as said sugar.

### (Acid)

The beverage of the present invention comprises at least one acid selected from the group consisting of citric acid, malic acid, tartaric acid, phosphoric acid, lactic acid and gluconic acid. In the beverage of this invention, said acid can be used to serve as an acidulant. Such an acidulant also includes salts of the aforementioned acids, and specific examples of said salts include trisodium hydrogen citrate and the like. Said acidulant may also be derived from natural sources such as fruit juice.

The beverage of the present invention has an acidity of 0.04 to 0.31 g/100 mL. For the purpose of the specification, the acidity is a value serving as an index for acid content, and can be determined by calculation based on the amount of an alkali, such as sodium hydroxide, required for neutralizing a certain amount of a beverage (sample) with said alkali. Acidity measurement can be conducted using, for example, an automatic titrator (*e.g.,* Mettler Toledo DL50). In this invention, the acidity is expressed using a value calculated in terms of citric acid content.

The acidity of the beverage of the present invention is in the range of 0.04 to 0.31 g/100 mL, and is preferably 0.05 g/100 mL or more, 0.06 g/100 mL or more, 0.07 g/100 mL or more, or 0.08 g/100 mL, and also is preferably 0.25 g/100 mL or less, 0.2 g/100 mL or less, or 0.15 g/100 mL or less. The acidity of the beverage of this invention is in the range of preferably 0.05 to 0.2 g/100 mL, more preferably 0.07 to 0.15 g/100 mL.

The acidity of the beverage of the present invention may be defined as the total acidity of at least one acid selected from the group consisting of citric acid, malic acid, tartaric acid, phosphoric acid, lactic acid and gluconic acid. In this case, the acidity of the beverage of this invention can be expressed as the acidity derived from at least one acid selected from the group consisting of citric acid, malic acid, tartaric acid, phosphoric acid, lactic acid and gluconic acid. In the beverage of this invention, each one of citric acid, malic acid, tartaric acid, phosphoric acid, lactic acid and gluconic acid can be used alone, or two or more thereof can be used in combination.

The content of the aforementioned acid is not particularly limited as long as the acidity of the beverage of the present invention falls within the aforementioned range. The content of said acid in the beverage of this invention is for example in the range of 0.1 to 15 g/L. The content of said acid is defined as the total content of at least one acid selected from the group consisting of citric acid, malic acid, tartaric acid, phosphoric acid, lactic acid and gluconic acid. In the case of using citric acid, the content of this acid in the inventive beverage is for example in the range of 0.4 to 3.1 g/L. In the case of using malic acid, the content of this acid in the inventive beverage is for example in the range of 0.41 to 3.25 g/L. In the case of using tartaric acid, the content of this acid in the inventive beverage is for example in the range of 0.46 to 3.64 g/L. In the case of using phosphoric acid, the content of this acid in the inventive beverage is for example in the range of 0.3 to 2.38 g/L. In the case of using lactic acid, the content of this acid in the inventive beverage is for example in the range of 0.56 to 4.36 g/L. In the case of using gluconic acid, the content of this acid in the inventive beverage is for example in the range of 1.6 to 12.4 g/L.

The contents of those different acids can be measured by following a method known to skilled artisans -- for example, using HPLC or the like. In the present invention, a commercially available product can be used as said acid.

### (Weight ratio of sugar content to acidity)

In the beverage of the present invention, the content (A) of at least one sugar selected from the group consisting of glucose, fructose and sucrose and the acidity (B) are adjusted at a particular weight ratio. To be specific, the weight ratio of A to B ([A]/[B]) is in the range of 16 to 250. The use of the particular sugar(s) and acid(s), and the beverage's acidity, as described above, are important as factors for suppressing the bitterness of caffeine in a colorless transparent beverage, but this weight ratio of sugar content to acidity is also considered to serve an important role in suppression of caffeine's bitterness. It is considered that in this invention, the bitterness of caffeine in a colorless transparent beverage can be effectively suppressed by adjusting said weight ratio to be in the range of 16 to 250. Said weight ratio in the beverage of this invention is preferably 17 or more, 18 or more, 19 or more, 20 or more, 21 or more, 22 or more, 23 or more, 24 or more, 25 or more, 26 or more, 27 or more, 28 or more, 29 or more, or 30 or more, and also is preferably 240 or less, 230 or less, 220 or less, 210 or less, 200 or less, 190 or less, 180 or less, 170 or less, 160 or less, 150 or less, 140 or less, 130 or less, 120 or less, 110 or less, 100 or less, 90 or less, 80 or less, 70 or less, or 60 or less. Said weight ratio in the beverage of this invention is in the range of preferably 17 to 200, more preferably 20 to 200, yet more preferably 25 to 150.

### (Colorless transparent beverage)

The beverage of the present invention is colorless. The colorless appearance of the beverage can be defined by a ΔE (color difference) value of transmitted light as measured relative to pure water using a colorimetric color difference meter (*e.g.,* ZE 2000 (produced by Nippon Denshoku Industries Co., Ltd.)). To be specific, the ΔE value of the beverage of this invention as measured relative to pure water is 3.5 or less. The ΔE value is preferably 2.3 or less.

Also, the beverage of the present invention is transparent. By stating that "the beverage is transparent", it is meant that the beverage is not white turbid like so-called sports drinks nor cloudy like cloudy fruit juices, and is visually transparent like water. The transparency of the beverage can be converted to numerical data using a known technique for measuring liquid turbidity. The transparency of the beverage can be defined by absorbance at a wavelength of 660 nm as measured using an ultraviolet visible spectrophotometer (*e.g.,* UV-1600 (produced by Shimadzu Corporation)). To be specific, the beverage of this invention has an absorbance at a wavelength of 660 nm of 0.06 or less. When a beverage is cloudy, the bitterness coming from caffeine becomes harder to feel due to the presence of particles that cause the beverage to be cloudy. On the other hand, when a beverage is transparent, or namely is not cloudy, the bitterness coming from caffeine becomes easier to feel due to the absence of such particles. Therefore, the technique of this invention is useful for colorless transparent beverages.

### (Alcohol)

The beverage of the present invention further comprises an alcohol with 2 or 3 carbon atoms. When an alcohol with 2 or 3 carbon atoms is added to the beverage of this invention, the effect to suppress bitterness coming from caffeine can be further enhanced. The content of an alcohol with 2 or 3 carbon atoms in the beverage of this invention is in the range of 0.001 to 0.5 wt.%. This content is preferably 0.003 wt.% or more, 0.005 wt.% or more, 0.007 wt.% or more, or 0.01 wt.% or more, and also is preferably 0.4 wt.% or less, 0.3 wt.% or less, 0.2 wt.% or less, or 0.1 wt.% or less. The content of an alcohol with 2 or 3 carbon atoms in the beverage of this invention is in the range of preferably 0.005 to 0.4 wt.%, more preferably 0.01 to 0.1 wt.%. When the content of an alcohol with 2 or 3 carbon atoms falls within the aforementioned range, the bitterness coming from caffeine in the beverage can be suppressed more effectively. If this content exceeds 0.5 wt.%, the peculiar smell and taste coming from an alcohol with 2 or 3 carbon atoms becomes more intense and tends to deteriorate the flavor of the beverage. On the other hand, if this content falls below 0.001 wt.%, the effect of the alcohol with 2 or 3 carbon atoms to suppress caffeine's bitterness may not be fully achieved. Unless otherwise specified, "wt.%" as used herein refers to a percentage by weight/volume (w/v).

The alcohol with 2 or 3 carbon atoms contained in the beverage of the present invention is not particularly limited, and examples thereof include ethanol, propanol, isopropanol, glycerol, propylene glycol, and the like. In the beverage of this invention, one of those alcohols with 2 or 3 carbon atoms can be used alone, or two or more thereof can be used in combination. When two or more alcohols are used, the aforementioned alcohol content is defined as the total content of those alcohols. The alcohol with 2 or 3 carbon atoms used in the beverage of this invention is preferably ethanol.

### (Non-polymerized catechin compound)

The "non-polymerized catechin compound" refers to a monomeric catechin compound that is not polymerized. Examples of the non-polymerized catechin compound include catechin, gallocatechin, catechin gallate (CG), gallocatechin gallate (GCG), epicatechin, epigallocatechin, epicatechin gallate (ECG), and epigallocatechin gallate (EGCG).

The beverage of the present invention may contain a non-polymerized catechin compound. When the beverage of this invention contains a non-polymerized catechin compound, one or more of the compounds belonging to non-polymerized catechin compounds are present in the beverage. The content of a non-polymerized catechin compound in the beverage of this invention is not particularly limited, but is typically not more than 100 mg/100 mL, preferably 0 to 80 mg/100 mL, more preferably 0 to 60 mg/100 mL. If the content of a non-polymerized catechin compound exceeds 100 mg/100 mL, the beverage tends to become strong in bitter astringency.

The form in which a non-polymerized catechin compound is used is not particularly limited, and an isolated or purified product of a compound belonging to non-polymerized catechin compounds may be used, or an extract from tea leaves such as oolong tea may be used. The non-polymerized catechin compound may be a commercially available product or a product separately prepared using a known method. The content of a non-polymerized catechin compound can be measured by following a method known to skilled artisans -- for example, using HPLC or the like.

### (Mineral)

The beverage of the present invention preferably contains a mineral, with its type being not particularly limited. When a mineral is added to the beverage of this invention, the effect to suppress bitterness coming from caffeine can be further enhanced. Examples of the mineral include, but are not limited to, sodium, potassium, magnesium, calcium, and iron. Such minerals can be added to the beverage of this invention in the form of salts that can be used in foods and beverages, or in the form of deep ocean water, seaweed essence, or the like which are rich in such minerals. In the beverage of this invention, one of such minerals can be used alone, or two or more thereof can be used in combination. The mineral used in the beverage of this invention is preferably sodium.

When sodium is used as a mineral, the content of sodium in the beverage of the present invention is not particularly limited, but is for example in the range of 1 to 50 mg/100 mL, preferably 5 to 40 mg/100 mL. When the mineral is used in the form of a salt, the content of the mineral shall be calculated in terms of its free form.

### (Other components)

In addition to the different ingredients described hereinabove, various additives used in common beverages, such as flavorant, enrichment (*e.g.,* vitamin), antioxidant, emulsifier, preservative, essence, dietary fiber, pH adjustor, and quality stabilizer, can be added to the beverage of the present invention, to the extent that such additives do not impair the effects of the present invention.

The flavorant used in the beverage of the present invention is not particularly limited, but is preferably a flavorant that imparts a natural taste and refreshing flavor to the beverage. Examples of such a flavorant include, but are not limited to, fruit-based flavor, citrus-based flavor, mint-based flavor, coffee flavor, and cocoa flavor.

The type of the beverage provided by the present invention is not particularly limited, and the inventive beverage can be of any type, including nutritional beverage, functional beverage, flavored water (near water) beverage, and tea beverage (*e.g.,* black tea, oolong tea).

Also, the beverage of the present invention can be a carbonated beverage or non-carbonated beverage. However, since the effect to suppress bitterness coming from caffeine may diminish in the case of a carbonated beverage, it is preferred that the beverage of this invention be a non-carbonated beverage. Additionally, when the beverage of this invention is provided as a carbonated (*i.e.,* effervescent) beverage, the method for producing a carbonated beverage is not particularly limited, and the carbonated beverage can be produced by fermenting a beverage to produce carbon dioxide in the beverage or by artificially injecting carbon dioxide into a beverage.

The beverage of the present invention can be a packaged beverage, which is a beverage that is heat sterilized and packed in a package. The package used is not particularly limited, and exemplary packages include PET bottle, aluminum can, steel can, carton, cup for chilled drink, and glass bottle. *Inter alia,* it is preferred to use a colorless transparent package such as PET bottle, since one can see the characteristic colorless transparent appearance of the beverage of this invention while the beverage is packed in such a package. When heat sterilization is performed, the method of heat sterilization is not particularly limited. Heat sterilization can be performed using a common method such as UHT sterilization or retort sterilization. The temperature conditions for heat sterilization process are not particularly limited, and are, for example, 65 to 130°C, preferably 85 to 120°C, for 10 to 40 minutes. However, any other sterilization process can also be performed at an appropriate temperature for several seconds, such as 5 to 30 seconds, as long as such a process can achieve a comparable sterilizing value to that process under the aforementioned conditions.

### (Beverage production method)

Another aspect of the present invention provides a method for producing a beverage.

The production method of the present invention is a method for producing a beverage comprising:
0.1 to 60 mg/100 mL of caffeine,
at least one sugar selected from the group consisting of glucose, fructose and sucrose; and
at least one acid selected from the group consisting of citric acid, malic acid, tartaric acid, phosphoric acid, lactic acid and gluconic acid;
wherein the beverage has an absorbance at a wavelength of 660 nm of 0.06 or less;
wherein the beverage has a ΔE (color difference) value of 3.5 or less relative to pure water;
the method comprising the steps of:
   adjusting acidity to be in the range of 0.04 to 0.31 g/100 mL;
   adjusting a weight ratio of a content of said sugar to said acidity to be in the range of 16 to 250; and
   incorporating an alcohol with 2 or 3 carbon atoms in the beverage.

Various parameters associated with the production method of the present invention, such as the types and contents of the ingredients contained in the beverage are as described above in relation to the beverage of this invention or are obvious from the descriptions given above. The production method of this invention can also comprise the steps of mixing the components and ingredients described above and adjusting their contents. The different steps can be performed simultaneously, separately or in random order. The timings of the different steps can be adjusted as appropriate depending on the state of production.

In the production method of the present invention, the method and order of mixing ingredients are not particularly limited. Also, the production apparatus used is not particularly limited. In the production method of this invention, any techniques known to skilled artisans can be used. When the need arises to make the beverage effervescent, a step of injecting carbon dioxide can be added, as appropriate, to the production method of this invention. Further, if necessary, sterilization, packaging, and other steps can be added, as appropriate, to the production method of this invention. In a preferred mode, the beverage of this invention can be made into a packaged beverage through the step of packing the beverage in a package, or can be made into a sterilized, packaged beverage in such a manner as follows. For example, the sterilized, packaged beverage can be produced by taking the step of subjecting a package having a beverage packed therein to heat sterilization such as retort sterilization, or by taking the step of sterilizing a beverage and then packing it in a package.

### EXAMPLES

Hereunder, the present invention will be specifically described in detail by reference to experimental and working examples, but this invention is not limited to these examples.

### (Test Example 1)

Different trial products were prepared by adding caffeine and an emulsified flavor to water so as to ensure that these ingredients were contained in the amounts shown in the table given below. The prepared trial products were measured for their absorbance at a wavelength of 660 nm using a spectrophotometer (UV-1600 (produced by Shimadzu Corporation)).

The different trial products were rated by 3 panelists on whether the bitterness coming from caffeine was felt. To be specific, the trial products were rated on a six-grade scale from 6 to 1 (6, 5, 4, 3, 2, 1), with "6" being "no bitterness was felt" and "1" being "bitterness was felt". The averages of their ratings are shown in the table given below.

**[Table 1]**

| | Trial Product 1 | Trial Product 2 | Trial Product 3 |
|---|---|---|---|
| Caffeine (mg/100mL) | 5.00 | 5.00 | 5.00 |
| Emulsified flavor (g/L) | -- | 0.250 | 0.500 |
| Absorbance (660nm) | 0.000 | 0.058 | 0.119 |
| Sensory rating | 1 | 2 | 4 |

As shown in the above table, it was found that the beverages having an absorbance at a wavelength of 660 nm of 0.06 or less were more apt to make the panelists feel the bitterness of caffeine.

### (Test Example 2)

Different trial products were prepared by adding high-fructose corn syrup, citric acid, and caffeine to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The acidity of the trial products was measured using an automatic titrator. Also in subsequent test examples, acidity measurement was done in the same way. The panelists tasted the different trial products and rated them on whether the bitterness coming from caffeine was felt to be suppressed, using the same procedure as in Test Example 1. The averages of their ratings are shown in the table given below.

**[Table 2]**

| | Trial Product 4 | Trial Product 5 | Trial Product 6 | Trial Product 7 | Trial Product 8 | Trial Product 9 | Trial Product 10 | Trial Product 11 | Trial Product 12 | Trial Product 13 | Trial Product 14 | Trial Product 15 |
|---|---|---|---|---|---|---|---|---|---|---|---|---|
| Glucose (g/100g) | 0.76 | 0.76 | 1.52 | 1.90 | 3.80 | 3.80 | 3.80 | 6.09 | 6.09 | 7.58 | 7.58 | 7.58 |
| Fructose (g/100g) | 0.24 | 0.24 | 0.48 | 0.60 | 1.19 | 1.19 | 1.19 | 1.91 | 1.91 | 2.38 | 2.38 | 2.38 |
| Citric acid (g/L) | 0.200 | 0.400 | 2.50 | 1.50 | 0.400 | 1.20 | 3.00 | 1.20 | 2.00 | 0.200 | 0.400 | 3.00 |
| Caffeine (mg/100mL) | 10.0 | 10.0 | 10.0 | 10.0 | 10.0 | 10.0 | 10.0 | 10.0 | 10.0 | 10.0 | 10.0 | 10.0 |
| Sugar content (g/100g) | 1.00 | 1.00 | 2.00 | 2.50 | 5.00 | 5.00 | 5.00 | 8.00 | 8.00 | 9.97 | 9.97 | 9.97 |
| Acidity (g/100mL) | 0.020 | 0.040 | 0.250 | 0.150 | 0.040 | 0.120 | 0.300 | 0.120 | 0.200 | 0.020 | 0.040 | 0.300 |
| Sugar content/acidity | 50 | 25 | 8 | 17 | 125 | 42 | 17 | 67 | 40 | 498 | 249 | 33 |
| Sensory rating | 2.0 | 3.7 | 2.7 | 3.7 | 3.7 | 5.0 | 3.7 | 4.7 | 4.3 | 3.2 | 3.7 | 4.3 |

As shown in the above table, trial products yielded satisfactory results when they had a weight ratio of sugar content to acidity within the particular range.

### (Test Example 3)

Different trial products were prepared by adding any one of the following sugars: fructose, granulated sugar, glucose, or saccharified starch (containing 12% of glucose and 88% of other sugars than glucose, fructose and sucrose), as well as citric acid and caffeine to water so as to ensure that these ingredients were contained in the amounts shown in the table given below. Trial Products 31 to 34 were prepared using saccharified starch. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

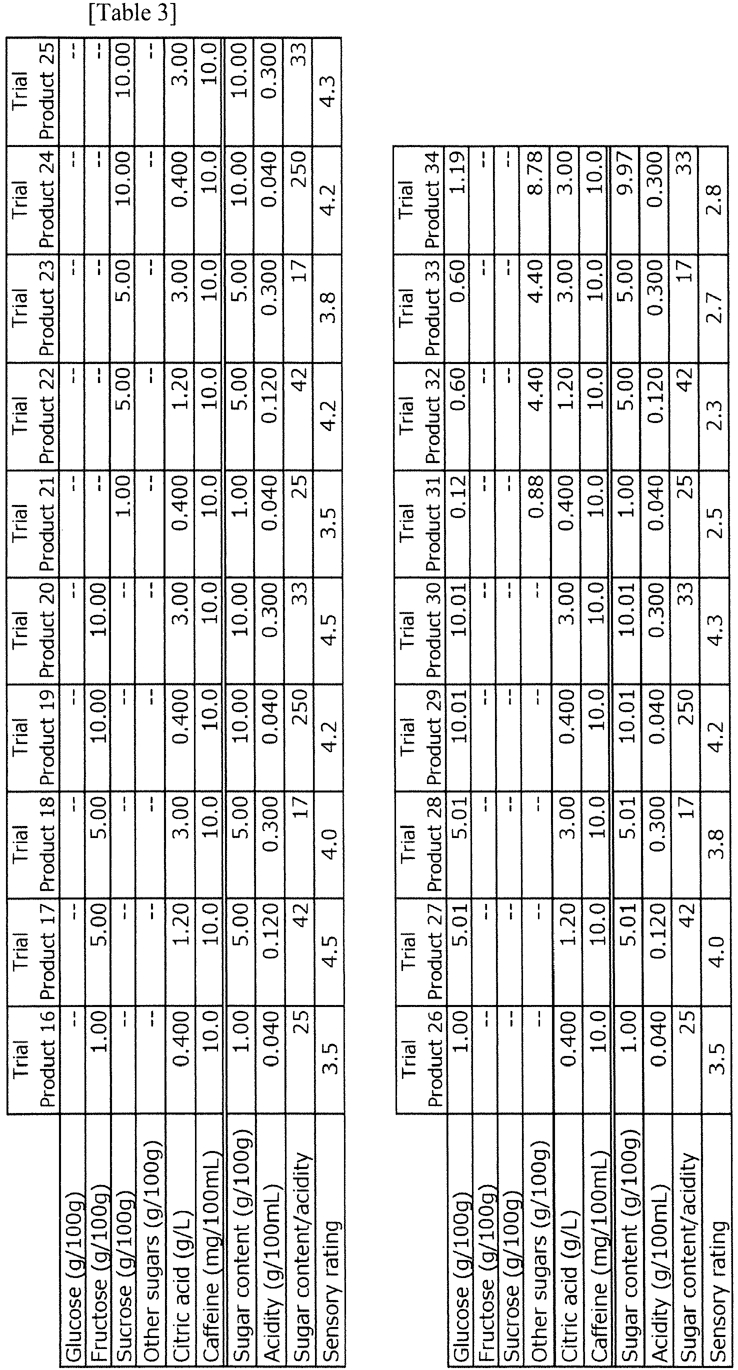

As shown in the above table, the trial products prepared using other sugars than saccharified starch yielded satisfactory results.

### (Test Example 4)

Different trial products were prepared by adding any one of the following acids: malic acid, tartaric acid, or phosphoric acid, as well as high-fructose corn syrup and caffeine to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

**[Table 4]**

| | Trial Product 35 | Trial Product 36 | Trial Product 37 | Trial Product 38 | Trial Product 39 | Trial Product 40 | Trial Product 41 | Trial Product 42 | Trial Product 43 | Trial Product 44 | Trial Product 45 | Trial Product 46 | Trial Product 47 | Trial Product 48 | Trial Product 49 |
|---|---|---|---|---|---|---|---|---|---|---|---|---|---|---|---|
| Glucose (g/100) | 0.76 | 3.80 | 3.80 | 7.58 | 7.58 | 0.76 | 3.80 | 3.80 | 7.58 | 7.58 | 0.76 | 3.80 | 3.80 | 7.58 | 7.58 |
| Fructose (g/100g) | 0.24 | 1.19 | 1.19 | 2.38 | 2.38 | 0.24 | 1.19 | 1.19 | 2.38 | 2.38 | 0.24 | 1.19 | 1.19 | 2.38 | 2.38 |
| Malic acid (g/L) | 0.420 | 1.26 | 3.14 | 0.420 | 3.14 | -- | -- | -- | -- | -- | -- | -- | -- | -- | -- |
| Tartaric acid (g/L) | -- | -- | -- | -- | -- | 0.470 | 1.41 | 3.52 | 0.470 | 3.52 | -- | -- | -- | -- | -- |
| Phosphoric acid (g/L) | -- | -- | -- | -- | -- | -- | -- | -- | -- | -- | 0.310 | 0.920 | 2.30 | 0.310 | 2.30 |
| Caffeine mg/100mL | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| Sugar content (g/100g) | 1.00 | 5.00 | 5.00 | 9.97 | 9.97 | 1.00 | 5.00 | 5.00 | 9.97 | 9.97 | 1.00¹ | 5.00 | 5.00 | 9.97 | 9.97 |
| Acidity (g/100mL) | 0.040 | 0.120 | 0,300 | 0.040 | 0.300 | 0.040 | 0.120 | 0.300 | 0.040 | 0.300 | 0.040 | 0.120 | 0.300 | 0.040 | 0.300 |
| Sugar content/acidity | 25 | 42 | 17 | 248 | 33 | 25 | 42 | 17 | 248 | 33 | 25 | 42 | 17 | 246 | 33 |
| Sensory rating | 3.7 | 4.5 | 4.3 | 4.5 | 4.3 | 3.5 | 4.2 | 4.0 | 4.3 | 4.0 | 3.5 | 4.0 | 3.8 | 4.3 | 4.0 |

As shown in the above table, even the trial products prepared using malic acid, tartaric acid, or phosphoric acid yielded satisfactory results comparable to those prepared with citric acid.

### (Test Example 5)

Different trial products were prepared by adding any one of the following acids: lactic acid, gluconic acid, or acetic acid, as well as high-fructose corn syrup and caffeine to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

**[Table 5]**

| | Trial Product 50 | Trial Product 51 | Trial Product 52 | Trial Product 53 | Trial Product 54 | Trial Product 55 | Trial Product 56 | Trial Product 57 | Trial Product 58 | Trial Product 59 | Trial Product 60 | Trial Product 61 | Trial Product 62 | Trial Product 63 | Trial Product 64 |
|---|---|---|---|---|---|---|---|---|---|---|---|---|---|---|---|
| Glucose (g/100g) | 0.76 | 3.80 | 3.80 | 7.58 | 7.58 | 0.76 | 3.80 | 3.80 | 7.58 | 7.58 | 0.76 | 3.80 | 3.80 | 7.58 | 7.58 |
| Fructose (g/100g) | 0.24 | 1.19 | 1.19 | 2.38 | 2.38 | 0.24 | 1.19 | 1.19 | 2.38 | 2.38 | 0.24 | 1.19 | 1.19 | 2.38 | 2.38 |
| Lactic acid (g/L) | 0.565 | 1.69 | 4.22 | 0.565 | 4.22 | -- | -- | -- | -- | -- | -- | -- | -- | -- | -- |
| Gluconic acid (g/L) | -- | -- | -- | -- | -- | 1.60 | 4.80 | 12.0 | 1.60 | 12.0 | -- | -- | -- | -- | -- |
| Acetic acid (g/L) | -- | -- | -- | -- | -- | -- | -- | -- | -- | -- | 0.387 | 1.15 | 2.89 | 0.387 | 2.89 |
| Caffeine (mg/100mL) | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| Sugar content (g/100g) | 1.00 | 5.00 | 5.00 | 9.97 | 9.97 | 1.00 | 5.00 | 5.00 | 9.97 | 9.97 | 1.00 | 5.00 | 5.00 | 9.97 | 9.97 |
| Acidity (g/100mL) | 0.040 | 0.120 | 0.300 | 0.040 | 0.300 | 0.040 | 0.120 | 0.300 | 0.040 | 0.300 | 0.040 | 0.120 | 0.301 | 0.040 | 0.301 |
| Sugar content/acidity | 25 | 42 | 17 | 248 | 33 | 25 | 42 | 17 | 249 | 33 | 25 | 42 | 17 | 248 | 33 |
| Sensory rating | 3.5 | 4.0 | 4.0 | 4.5 | 4.3 | 3.5 | 4.0 | 4.0 | 4.3 | 4.0 | 2.3 | 2.8 | 2.7 | 2.7 | 3.0 |

As shown in the above table, the trial products prepared using the other acids than acetic acid yielded satisfactory results comparable to those prepared with citric acid.

### (Test Example 6)

Different trial products were prepared by adding high-fructose corn syrup, citric acid, caffeine and common salt to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

**[Table 6]**

| | Trial Product 65 | Trial Product 66 | Trial Product 67 | Trial Product 68 | Trial Product 69 |
|---|---|---|---|---|---|
| Glucose (g/100g) | 3.80 | 3.80 | 3.80 | 3.80 | 3.80 |
| Fructose (g/100g) | 1.19 | 1.19 | 1.19 | 1.19 | 1.19 |
| Citric acid (g/L) | 1.20 | 1.20 | 1.20 | 1.20 | 1.20 |
| Caffeine (mg/100mL) | 10.0 | 10.0 | 10.0 | 10.0 | 10.0 |
| Sodium (mg/100mL) | -- | 5.0 | 10.0 | 20.0 | 40.1 |
| Sugar content (g/100g) | 5.00 | 5.00 | 5.00 | 5.00 | 5.00 |
| Acidity (g/100mL) | 0.120 | 0.120 | 0.120 | 0.120 | 0.120 |
| Sugar content/acidity | 42 | 42 | 42 | 42 | 42 |
| Sensory rating | 5 | 5.3 | 5.3 | 5.8 | 5.8 |

As shown in the above table, addition of sodium to trial products produced satisfactory results with respect to suppression of caffeine's bitterness.

### (Test Example 7)

Different trial products were prepared by adding any one of the following alcohols: ethanol, glycerol, propylene glycol or butanol, as well as high-fructose corn syrup, citric acid, and caffeine to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

**[Table 7]**

| | Trial Product 70 | Trial Product 71 | Trial Product 72 | Trial Product 73 | Trial Product 74 | Trial Product 75 | Trial Product 76 | Trial Product 77 | Trial Product 78 | Trial Product 79 | Trial Product 80 | Trial Product 81 | Trial Product 82 | Trial Product 83 |
|---|---|---|---|---|---|---|---|---|---|---|---|---|---|---|
| Glucose (g/100g) | 0.76 | 3.80 | 3.80 | 3.80 | 3.80 | 3.80 | 3.80 | 3.80 | 3.80 | 3.80 | 3.80 | 3.80 | 3.80 | 3.80 |
| Fructose (g/100g) | 0.24 | 1.19 | 1.19 | 1.19 | 1.19 | 1.19 | 1.19 | 1.19 | 1.19 | 1.19 | 1.19 | 1.19 | 1.19 | 1.19 |
| Citric acid (g/L) | 0.200 | 1.20 | 1.20 | 1.20 | 1.20 | 1.20 | 1.20 | 1.20 | 1.20 | 1.20 | 1.20 | 1.20 | 1.20 | 1.20 |
| Ethanol (%) | -- | -- | 0.001 | 0.005 | 0.100 | -- | -- | -- | -- | -- | -- | -- | -- | -- |
| Glycerol (%) | -- | -- | -- | -- | -- | 0.001 | 0.005 | 0.100 | -- | -- | -- | -- | -- | -- |
| Propylene glycol (%) | -- | -- | -- | -- | -- | -- | -- | -- | 0.001 | 0.005 | 0.100 | -- | -- | -- |
| Butanol (%) | -- | -- | -- | -- | -- | -- | -- | -- | -- | -- | -- | 0.001 | 0.005 | 0.100 |
| Caffeine (mg/100mL) | 10.0 | 10.0 | 10.0 | 10.0 | 10.0 | 10.0 | 10.0 | 10.0 | 10.0 | 10.0 | 10.0 | 10.0 | 10.0 | 10.0 |
| Sugar content (g/100g) | 1.00 | 5.00 | 5.00 | 5.00 | 5.00 | 5.00 | 5.00 | 5.00 | 5.00 | 5.00 | 5.00 | 5.00 | 5.00 | 5.00 |
| Acidity (g/100mL) | 0.020 | 0.120 | 0.120 | 0.120 | 0.120 | 0.120 | 0.120 | 0.120 | 0.120 | 0.120 | 0.120 | 0.120 | 0.120 | 0.120 |
| Suqar content/acidity | 50 | 42 | 42 | 42 | 42 | 42 | 42 | 42 | 42 | 42 | 42 | 42 | 42 | 42 |
| Sensory rating | 2 | 5 | 5.7 | 5.7 | 5.8 | 5.5 | 5.7 | 5.8 | 5.5 | 5.5 | 6 | 5 | 5 | 5 |

As shown in the above table, the trial products having ethanol, glycerol or propylene glycol added thereto yielded superior results with respect to suppression of caffeine's bitterness when compared to those with no such alcohol added thereto.

### (Test Example 8)

Different trial products were prepared by adding high-fructose corn syrup, citric acid, and caffeine to water so as to ensure that these ingredients were contained in the amounts shown in the table given below. The prepared trial products all appeared colorless and transparent like water, and showed an absorbance at a wavelength of 660 nm of 0.06 or less as measured by a spectrophotometer (UV-1600 (produced by Shimadzu Corporation)) and a ΔE value of transmitted light of 3.5 or less as measured relative to pure water using a colorimetric color difference meter (ZE 2000 (produced by Nippon Denshoku Industries Co., Ltd.)). The panelists tasted the different trial products and rated them on whether the bitterness coming from caffeine was felt to be suppressed, using the same procedure as in Test Example 1. The averages of their ratings are shown in the table given below.

**[Table 8]**

| | Trial Product 84 | Trial Product 85 | Trial Product 86 | Trial Product 87 | Trial Product 88 | Trial Product 89 | Trial Product 90 | Trial Product 91 |
|---|---|---|---|---|---|---|---|---|
| Glucose (g/100g) | 0.76 | 3.80 | 0.76 | 3.80 | 0.76 | 3.80 | 0.76 | 3.80 |
| Fructose (g/100g) | 0.24 | 1.19 | 0.24 | 1.19 | 0.24 | 1.19 | 0.24 | 1.19 |
| Lactic acid (g/L) | 0.200 | 1.20 | 0.200 | 1.20 | 0.200 | 1.20 | 0.200 | 1.20 |
| Caffeine (mg/100mL) | 1.00 | 1.00 | 20.0 | 20.0 | 30.0 | 30.0 | 40.0 | 40.0 |
| Sugar content (g/100g) | 1.00 | 5.00 | 1.00 | 5.00 | 1.00 | 5.00 | 1.00 | 5.00 |
| Acidity (g/100mL) | 0.020 | 0.120 | 0.020 | 0.120 | 0.020 | 0.120 | 0.020 | 0.120 |
| Sugar content/acidity | 50 | 42 | 50 | 42 | 50 | 42 | 50 | 42 |
| Sensory rating | 2.7 | 5 | 2 | 4.3 | 1.2 | 4.2 | 1 | 3.5 |

As shown in the above table, it was found that when trial products having particular ranges of acidity and weight ratio of sugar content to acidity contained caffeine in an amount within the specified range, they produced satisfactory results.

## Claims

1. A beverage comprising:
0.1 to 60 mg/100 mL of caffeine;
at least one sugar selected from the group consisting of glucose, fructose and sucrose; and
at least one acid selected from the group consisting of citric acid, malic acid, tartaric acid, phosphoric acid, lactic acid and gluconic acid;
wherein the beverage has an acidity of 0.04 to 0.31 g/100 mL;
wherein the beverage has a weight ratio of a content of said sugar to said acidity of 16 to 250;
wherein the beverage contains 0.001 to 0.5 wt.% of an alcohol with 2 or 3 carbon atoms;
wherein the beverage has an absorbance at a wavelength of 660 nm of 0.06 or less; and
wherein the beverage has a ΔE (color difference) value of 3.5 or less relative to pure water.

2. The beverage according to claim 1, wherein the beverage is a packaged beverage.

3. A method for producing a beverage comprising:
0.1 to 60 mg/100 mL of caffeine;
at least one sugar selected from the group consisting of glucose, fructose and sucrose; and
at least one acid selected from the group consisting of citric acid, malic acid, tartaric acid, phosphoric acid, lactic acid and gluconic acid;
wherein the beverage has an absorbance at a wavelength of 660 nm of 0.06 or less;
wherein the beverage has a ΔE (color difference) value of 3.5 or less relative to pure water;
the method comprising the steps of:
adjusting acidity to be in the range of 0.04 to 0.31 g/100 mL;
adjusting a weight ratio of a content of said sugar to said acidity to be in the range of 16 to 250; and
adding an alcohol with 2 or 3 carbon atoms to the beverage.
